# EUROPÄISCHE PATENTSCHRIFT

(11) **EP 2 588 340 B1**
(45) Veröffentlichungstag und Bekanntmachung des Hinweises auf die Patenterteilung: **26.02.2014**
(21) Anmeldenummer: 11719272.4
(22) Anmeldetag: 13.05.2011
(51) Int. Cl.: B60L 3/00, H02M 7/42, H02P 29/02, H02P 6/12, H02M 1/32

(54) **VERFAHREN ZUM BETRIEB EINES ANTRIEBSAGGREGATES IN EINEM KRAFTFAHRZEUG MIT EINER MINDESTENS DREIPHASIGEN ELEKTRISCHEN MASCHINE UND STEUERGERÄT FÜR EINEN WECHSELRICHTER**
METHOD FOR OPERATING AN AT LEAST THREE-PHASE ELECTRIC MOTOR SERVING AS DRIVE ASSEMBLY IN A MOTOR VEHICLE, AND CONTROL DEVICE FOR AN INVERTER
PROCÉDÉ POUR FAIRE FONCTIONNER UNE MACHINE ÉLECTRIQUE AU MOINS TRIPHASÉE FAISANT OFFICE DE MÉCANISME D'ENTRAÎNEMENT DANS UN VÉHICULE AUTOMOBILE ET APPAREIL DE COMMANDE POUR ONDULEUR

(30) Priorität: 02.07.2010 DE 102010030856
(43) Veröffentlichungstag der Anmeldung: 08.05.2013
(73) Patentinhaber: Robert Bosch GmbH, 70442 Stuttgart (DE)
(72) Erfinder: SCHLESER, Roland, 66125 Saarbruecken (DE); KANTH, Daniel, 71636 Ludwigsburg (DE); NIEMANN, Holger, Shanghai 200120 (CN); HEYL, Andreas, 71640 Ludwigsburg (DE)
(86) Internationale Anmeldenummer: PCT/EP2011/057772
(87) Internationale Veröffentlichungsnummer: WO 2012/000710

(56) Entgegenhaltungen:
- DE-A1-102006 032 446
- JP-A- 2005 094 873
- JP-A- 2009 071 975
- US-B1- 6 683 435

## Beschreibung

Die Erfindung betrifft ein Verfahren zum Betrieb einer als Antriebsaggregat in einem Kraftfahrzeug dienenden mindestens dreiphasigen elektrischen Maschine sowie ein Steuergerät für einen Wechselrichter.

### Stand der Technik

Für den Antrieb in Hybrid- oder Elektrofahrzeugen werden in der Regel elektrische Maschinen in Form von Drehfeldmaschinen eingesetzt, welche in Verbindung mit Wechselrichtern - häufig auch als Inverter bezeichnet - betrieben werden. Die elektrischen Maschinen werden dabei wahlweise im Motor- oder Generatorbetrieb betrieben. Im Motorbetrieb erzeugt die elektrische Maschine ein Antriebsmoment, welches beim Einsatz in einem Hybridfahrzeug einen Verbrennungsmotor, zum Beispiel in einer Beschleunigungsphase, unterstützt. Im Generatorbetrieb erzeugt die elektrische Maschine elektrische Energie, die in einem Energiespeicher, wie zum Beispiel einer Batterie oder einem Super-Cab gespeichert wird. Betriebsart und Leistung der elektrischen Maschine werden mittels einer Regeleinheit - häufig als Maschinenregler bezeichnet - über den Wechselrichter eingestellt.

Bekannte Wechselrichter umfassen eine Reihe von Schaltern, mit denen die einzelnen Phasen (U,V,W) der elektrischen Maschine wahlweise gegen ein hohes Potential, die so genannte Zwischenkreisspannung, oder gegen ein niedriges Bezugspotential, insbesondere Masse geschaltet werden. Die Schalter werden von einem externen Steuergerät angesteuert, das in Abhängigkeit vom Fahrerwunsch (Beschleunigen oder Bremsen) einen Soll-Betriebspunkt für die elektrische Maschine berechnet. Der Wechselrichter ist mit dem Steuergerät verbunden und erhält von diesem die entsprechenden Betriebsdaten bzw. Steuerbefehle.

Aus Sicherheitsgründen wird der Betrieb der elektrischen Maschine und des Wechselrichters überwacht und bei erkannten Fehlern eingeschränkt oder eingestellt.

So ist Beispielsweise aus der DE 10 2006 003 254 A1 ein Verfahren zum Abschalten einer elektrischen Maschine mit Pulswechselrichter im Falle einer Störung bekannt, bei dem unerwünschte Nebeneffekte beim Abschalten der elektrischen Maschine minimiert und der reguläre Maschinenbetrieb maximiert werden, indem die elektrische Maschine zunächst in einen Freischalt-Betrieb, in dem sämtliche Schalter des Pulswechselrichters geöffnet sind, und nachfolgend in einen Kurzschluss-Modus geschaltet wird, in dem die mit dem hohen Potential verbundenen Schalter offen und die mit dem niedrigen Potential (Masse) verbundenen Schalter geschlossen sind.

Um die Verfügbarkeit eines Fahrzeuges, wenn möglich, aber auch im Fehlerfall zu erhalten, ist es aus der DE 10 2008 000 904 A1 für ein Hybridfahrzeug bekannt, zumindest einen Betriebsparameterwert, der einen Betriebsparameter der elektrischen Maschine wiedergibt zu ermitteln, einen Fehler festzustellen, wenn zumindest einer der Betriebsparameterwerte nicht einem Betriebsparameter-Normzustand entspricht und den Betrieb der elektrischen Maschine als Fahrantriebsaggregat zumindest teilweise einzuschränken, wenn ein festgestellter Fehler vorliegt. Die elektrische Maschine wird dazu, wenn ein festgestellter Fehler vorliegt, zumindest temporär als Anlasser betrieben, unabhängig von dem Betreiben der elektrischen Maschine als Fahrantriebsaggregat. US 6683435 offenbart ein Verfahren zum Betrieb einer Maschine, wobei wenn ein erstes Schaltelement einer ersten Halbbrücke des Wechselrichters ausfallbedingt geschlossen ist, die ersten Schaltelemente der weiteren Halbbrücken dauerhaft geschlossen werden.

### Offenbarung der Erfindung

Die Erfindung schafft Verfahren zum Betrieb einer als Antriebsaggregat in einem Kraftfahrzeug dienenden mindestens dreiphasigen elektrischen Maschine, welche über einen Wechselrichter, insbesondere einen Pulswechselrichter, angesteuert wird, wobei der Wechselrichter Schaltelemente in Form von Halbbrücken umfasst und jeweils eine Halbbrücke elektrisch mit einer Phase der elektrischen Maschine verbunden ist.

Ist ein erstes Schaltelement einer mit einer ersten Phase verbundenen ersten Halbbrücke ausfallbedingt dauerhaft geschlossen, so wird erfindungsgemäß ein zweites Schaltelement der ersten Halbbrücke dauerhaft geöffnet und in einem ersten Winkelbereich einer elektrischen Umdrehung, welcher von der ersten Phase (U) unbeeinflusst ist, werden sämtliche Schaltelemente (3b, 3c, 3e, 3f) der weiteren Halbbrücken (10b, 10c) in herkömmlicher Weise angesteuert.

Ist ein erstes Schaltelement einer mit einer ersten Phase verbundenen ersten Halbbrücke dagegen ausfallbedingt dauerhaft geöffnet, so wird erfindungsgemäß ein zweites Schaltelement der ersten Halbbrücke dauerhaft geschlossen und in einem ersten Winkelbereich einer elektrischen Umdrehung, welcher von der ersten Phase (U) unbeeinflusst ist, werden sämtliche Schaltelemente (3b, 3c, 3e, 3f) der weiteren Halbbrücken (10b, 10c) in herkömmlicher Weise angesteuert.

Die Erfindung basiert auf der Grundidee, dass eine mindestens dreiphasige elektrische Maschine auch bei Ausfall einer Halbbrücke des Wechselrichters und dem damit verbundenen Ausfall der Steuerbarkeit der zugeordneten Phase in einem Teilbereich einer elektrischen Umdrehung in herkömmlicher Form weiterbetrieben werden kann. Dabei macht man sich zunutze, dass bei jeder elektrischen Umdrehung Winkelbereiche auftreten, welche von einer der Phasen unbeeinflusst sind. In diesem Winkelbereich können die Schaltelemente der weiteren, von dem Ausfall nicht betroffenen Halbbrücken derart angesteuert werden, dass die elektrische Maschine in einem Motorbetrieb betrieben wird, so dass sich ein im Vergleich zum Normalbetrieb zwar reduziertes Drehmoment ergibt, welches beispielsweise aber genutzt werden kann, um mit dem Kraftfahrzeug bis zur nächstgelegenen Werkstätte weiterzufahren. Im Falle eines Hybridfahrzeuges, welches neben der elektrischen Maschine auch einen Verbrennungsmotor als weiteres Antriebsaggregat aufweist, kann das reduzierte Drehmoment alternativ auch zum Starten des Verbrennungsmotors genutzt werden, so dass anschließend eine rein verbrennungsmotorische Weiterfahrt ermöglicht wird. Alternativ dazu können die Schaltelemente der weiteren, von dem Ausfall nicht betroffenen Halbbrücken in dem ersten Winkelbereich auch derart angesteuert werden, dass die elektrische Maschine in einem Generatorbetrieb betrieben wird, so dass sich eine im Vergleich zum Normalbetrieb zwar reduzierte elektrische Energie ergibt, der jedoch genutzt werden kann, um beispielsweise einen Energiespeicher des Kraftfahrzeuges, wie z.B. eine Batterie, zu laden und somit Energie für einen Wiederstart sowie weitere Verbraucher, wie Licht, Unterdruckpumpe für Bremsen oder auch eine Servolenkung, zur Verfügung zu stellen. Das erfindungsgemäße Verfahren führt damit mit geringem Aufwand zu einer deutlichen Erhöhung der Verfügbarkeit des Kraftfahrzeuges.

Als besonders vorteilhaft bei dem erfindungsgemäßen Verfahren erweist sich die Tatsache, dass durch die fortgesetzte Ansteuerung der Schaltelemente der vom Ausfall nicht betroffenen Halbbrücken nicht nur eine vorhandene Drehbewegung der elektrischen Maschine aufrechterhalten werden kann, sondern dass unter Ausnutzung der Trägheitskräfte sogar ein Anlaufen der elektrischen Maschine, das heißt ein Übergang vom Stillstand in den drehenden Zustand ermöglicht wird. Somit ist das erfindungsgemäße Verfahren unabhängig von der Drehgeschwindigkeit der elektrischen Maschine zum Zeitpunkt des Ausfalls eines Schaltelementes in dem Wechselrichter anwendbar.

Grundsätzlich sind für den Ausfall eines Schaltelementes innerhalb einer Halbbrücke eines Wechselrichters vier Ausfallszenarien denkbar:
a) Ein Schaltelement, welches eine Phase (U, V, W) der elektrischen Maschine gegen ein hohes Versorgungsspannungspotential (Zwischenkreisspannung) schalten kann (High-Side-Schalter) ist ausfallbedingt dauerhaft geschlossen.
   In diesem Fall liegt an der betreffenden Phasen-Anschlussklemme der elektrischen Maschine konstant das hohe Versorgungsspannungspotential an. Für ein Spannungszeigerdiagramm der elektrischen Maschine bedeutet das, dass der betroffene Spannungszeiger dauerhaft den maximalen Wert annimmt und damit auf der Umfangslinie des kreisförmigen Diagramms zu liegen kommt. Z.B. bei einer dreiphasigen elektrischen Maschine mit drei um 120° bezüglich ihrer Achsen verschobenen Phasenwicklungen, sind aber nur zwei der insgesamt drei Winkelsektoren einer vollständigen elektrischen Umdrehung durch diesen Spannungszeiger und damit die zugehörige Phase beeinflusst. Es verbleibt somit ein Winkelbereich von 120°, in welchem die elektrische Maschine und damit auch der Wechselrichter unbeeinflusst von dem Ausfall des Schaltelementes in herkömmlicher Weise weiter angesteuert werden kann.
   Um einen Kurzschluss in der vom Ausfall betroffenen Halbbrücke zu vermeiden, wird der Low-Side-Schalter der betroffenen Halbbrücke dauerhaft geöffnet. Dies wird vorteilhaft bereits beim Schaltungsentwurf berücksichtigt und durch die zur Ansteuerung verwendeten Bauteile unterstützt.
b) Ein Schaltelement, welches eine Phase (U, V, W) der elektrischen Maschine gegen ein niedriges Bezugspotential (Masse) schalten kann (Low-Side-Schalter) ist ausfallbedingt dauerhaft geschlossen.
   In diesem Fall liegt an der betreffenden Phasen-Anschlussklemme der elektrischen Maschine konstant das niedrige Bezugspotential an. Auch in diesem Fall verbleibt aber ein Winkelbereich von z.B. 120° (siehe a)), in welchem die elektrische Maschine und damit auch der Wechselrichter unbeeinflusst von dem Ausfall des Schaltelementes in herkömmlicher Weise weiter angesteuert werden kann.
   Um einen Kurzschluss in der vom Ausfall betroffenen Halbbrücke zu vermeiden, wird in diesem Fall der High-Side-Schalter der betroffenen Halbbrücke dauerhaft geöffnet. Auch dies wird vorteilhaft bereits beim Schaltungsentwurf berücksichtigt und durch die zur Ansteuerung verwendeten Bauteile unterstützt.
c) Ein High-Side-Schalter ist ausfallbedingt dauerhaft geöffnet.
   Geht man davon aus, dass der Low-Side-Schalter in der betroffenen Halbbrücke zunächst offen ist, so ist die betreffende Phasen-Anschlussklemme unmittelbar weder mit dem hohen Versorgungsspannungspotential noch mit dem niedrigen Bezugspotential verbunden. Es ergibt sich lediglich eine mittelbare Verbindung über die Phasenwicklungen der elektrischen Maschine. Das Spannungspotential an der Phasen-Anschlussklemme wird in diesem Fall durch Induktionsspannungen in den Phasenwicklungen (oder ggf. durch eine an die elektrische Maschine angelegte Spannung) bestimmt. Durch dauerhaftes Schließen des Low-Side-Schalters in der vom Ausfall betroffenen Halbbrücke kann jedoch die betreffende Phasen-Anschlussklemme der elektrischen Maschine konstant auf das niedrige Bezugspotential gelegt werden, so dass sich eine Konstellation, wie unter b) beschrieben, ergibt.
d) Ein Low-Side-Schalter ist ausfallbedingt dauerhaft geöffnet.
   Geht man davon aus, dass der High-Side-Schalter in der betroffenen Halbbrücke zunächst offen ist, so ergibt sich ein analoges Szenario, wie unter c) beschrieben. Durch dauerhaftes Schließen des High-Side-Schalters in der vom Ausfall betroffenen Halbbrücke kann jedoch die betreffende Phasen-Anschlussklemme der elektrischen Maschine konstant auf das hohe Versorgungsspannungspotential gelegt werden, so dass sich eine Konstellation, wie unter a) beschrieben, ergibt.
   Auf diese Weise ist das erfindungsgemäße Verfahren für alle denkbaren Ausfallszenarien der Schaltungselemente der Halbbrücken anwendbar.

Gemäß einer Ausführungsform der Erfindung werden die Schaltelemente der weiteren Halbbrücken in dem zweiten Winkelbereich dauerhaft geöffnet, so dass in diesem Winkelbereich keine Schlepp- oder Bremsmomente auftreten, welche die Drehbewegung der elektrischen Maschine unnötig behindern würden.

Die Erfindung schafft außerdem ein Steuergerät zum Steuern eines Wechselrichters, insbesondere Pulswechselrichters, welcher eine als Antriebsaggregat in einem Kraftfahrzeug dienende mindestens dreiphasige elektrische Maschine ansteuert, wobei der Wechselrichter Schaltelemente in Form von Halbbrücken umfasst und jeweils eine Halbbrücke elektrisch mit einer Phase der elektrischen Maschine verbunden ist. Dabei ist das Steuergerät derart ausgeführt, dass es bei ausfallbedingter dauerhafter Schließung eines ersten Schaltelementes einer mit einer ersten Phase verbundenen ersten Halbbrücke ein zweites Schaltelement der ersten Halbbrücke dauerhaft öffnet oder bei ausfallbedingter dauerhafter Öffnung des ersten Schaltelementes das zweites Schaltelement dauerhaft schließt. In beiden Fällen steuert das Steuergerät aber in einem ersten Winkelbereich einer elektrischen Umdrehung, welcher von der ersten Phase unbeeinflusst ist, sämtliche Schaltelemente (3b, 3c, 3e, 3f) der weiteren Halbbrücken (10b, 10c) in herkömmlicher Weise an.

Weitere Merkmale und Vorteile von Ausführungsformen der Erfindung ergeben sich aus der nachfolgenden Beschreibung mit Bezug auf die beigefügte Figur, welche ein schematisches Blockschaltbild einer elektrischen Maschine sowie eines Wechselrichters mit einem erfindungsgemäßen Motorregler.

### Kurze Beschreibung der Zeichnungen

Es zeigen:
- Fig. 1: ein schematisches Blockschaltbild einer elektrischen Maschine sowie eines Wechselrichters mit einem erfindungsgemäßen Steuergerät
- Fig. 2: ein Spannungszeiger-Diagramm für eine elektrische Maschine gemäß Figur 1 bei intakten Halbbrücken,
- Fig. 3: den Verlauf der Ansteuersignale der einzelnen Schaltelemente eines Wechselrichters gemäß Figur 1 bei intakten Halbbrücken,
- Fig. 4: ein Spannungszeiger-Diagramm für eine elektrische Maschine gemäß Figur 1 bei Ausfall eines Schaltelementes in einer der Halbbrücken und
- Fig. 5: den Verlauf der Ansteuersignale der einzelnen Schaltelemente eines Wechselrichters gemäß Figur 1 bei Ausfall eines Schaltelementes in einer der Halbbrücken.

### Ausführungsformen der Erfindung

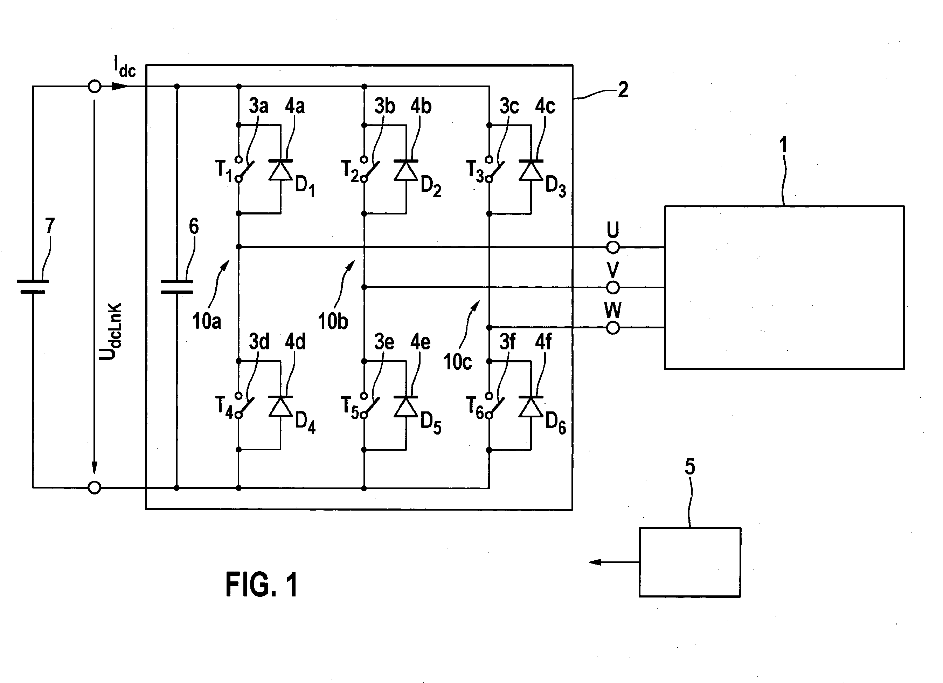

Figur 1 zeigt eine schematische Darstellung einer dreiphasigen elektrischen Maschine 1, welche beispielsweise als Synchron-, Asynchron- oder Reluktanz-Maschine ausgeführt sein kann, mit einem daran angeschlossenen Pulswechselrichter 2. Der Pulswechselrichter 2 umfasst Schaltelemente 3a-3f in Form von Leistungsschaltern, welche mit einzelnen Phasen U, V, W der elektrischen Maschine 1 verbunden sind und die Phasen U, V, W entweder gegen ein hohes Versorgungsspannungspotential in Form einer Zwischenkreisspannung U_{dcLnk} oder ein niedriges Bezugspotential in Form von Masse schalten. Die mit der Zwischenkreisspannung U_{dcLnk} verbundenen Schaltelemente 3a-3c werden dabei auch als "High-Side-Schalter" und die mit Masse verbundenen Schalter 3d-3f als "Low-Side-Schalter" bezeichnet und können beispielsweise als Insulated Gate Bipolar Transistor (IGBT) oder als Metal Oxide Semiconductor Field-Effect Transistor (MOSFET) ausgeführt sein. Der Pulswechselrichter 2 umfasst ferner mehrere Freilaufdioden 4a-4f, welche jeweils parallel zu einem der Schaltelemente 3a-3f angeordnet sind. Die Schaltelemente 3a und 3d, 3b und 3e sowie 3c und 3f bilden dabei jeweils eine Halbbrücke 10a, 10b bzw. 10f.

Der Pulswechselrichter 2 bestimmt Leistung und Betriebsart der elektrischen Maschine 1 und wird von einem Steuergerät 5, welches in Figur 1 lediglich schematisch dargestellt ist und auch in den Wechselrichter 2 integriert sein kann, entsprechend angesteuert. Die elektrische Maschine 1 kann dabei wahlweise im Motor- oder Generatorbetrieb betrieben werden.

Der Pulswechselrichter 2 umfasst außerdem einen sogenannten Zwischenkreis-Kondensator 6, welcher im Wesentlichen zur Stabilisierung einer Spannung eines Energiespeichers, also beispielsweise einer Batteriespannung dient. Das Bordnetz des Fahrzeugs mit einem Energiespeicher in Form einer Batterie 7 ist parallel zum Zwischenkreis-Kondensator 6 geschaltet.

Die elektrische Maschine 1 ist im dargestellten Ausführungsbeispiel dreiphasig ausgeführt, kann aber auch mehr als drei Phasen aufweisen.

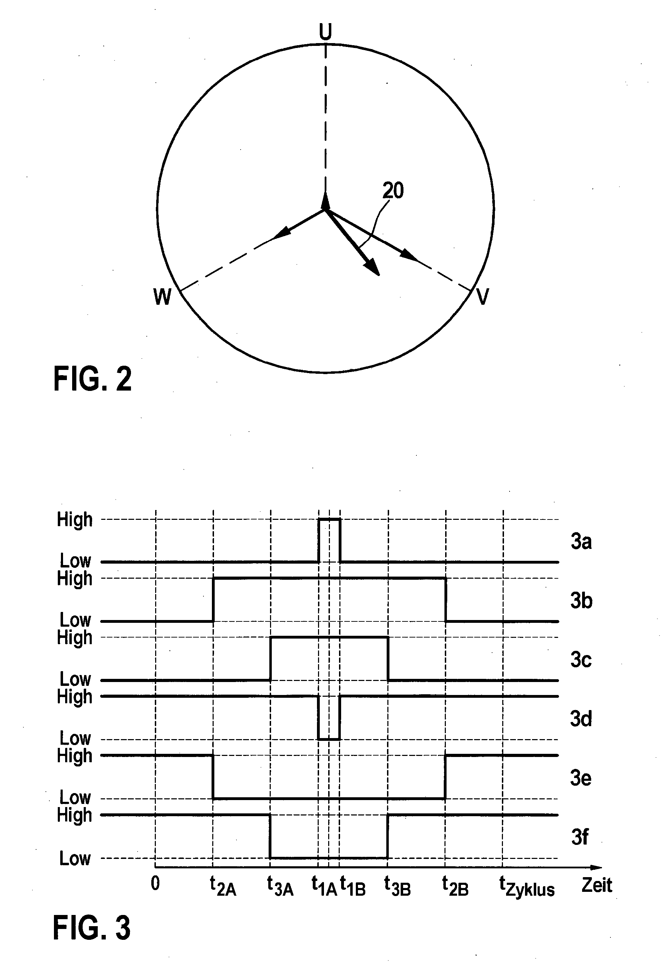

Im Normalbetrieb, das heißt bei intakten Schaltelementen 3a-3f, ergibt sich ein Spannungszeiger-Diagramm, wie es schematisch in Figur 2 dargestellt ist. Beispielhaft ist dabei ein Zeitpunkt einer elektrischen Umdrehung dargestellt, in welcher die Phase U der elektrischen Maschine keinen Beitrag zum resultierenden Spannungszeiger 20 liefert, wohingegen, die Phasen V und W jeweils einen Anteil liefern.

Die durch das Steuergerät in diesem fehlerfreien Fall erzeugten Steuersignale für die einzelnen Schaltelemente 3a-3f des Pulswechselrichters 2 sind in Figur 3 über die Dauer eines Ansteuerzyklus (0 bis t_{Zyklus}) hinweg schematisch dargestellt. Eine derartige herkömmliche Steuerung eines Pulswechselrichters 2 ist dem Fachmann wohlbekannt und soll deshalb an dieser Stelle nicht näher erläutert werden.

Im Folgenden sei beispielhaft ein Ausfall des High-Side-Schalters 3a angenommen, welcher sich darin äußert, dass der High-Side-Schalter 3a ausfallbedingt dauerhaft geöffnet ist (Ausfallszenario c)).

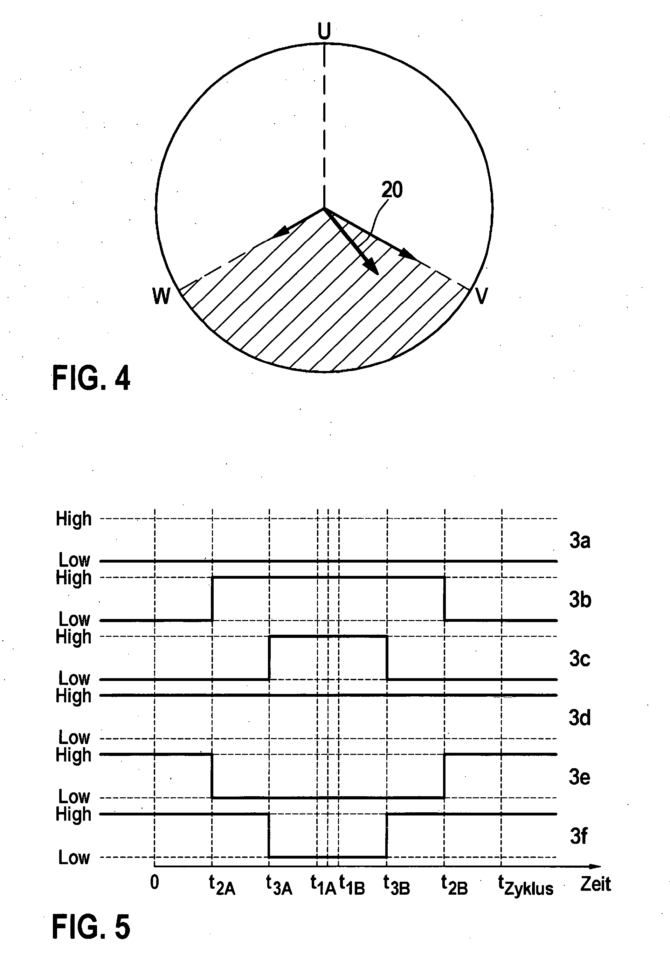

Das sich daraus ergebende Spannungszeiger-Diagramm ist in Figur 4 dargestellt. Dabei ist der identische Zeitpunkt einer elektrischen Umdrehung wie in Figur 2 dargestellt. Man erkennt, dass der Ausfall des Schaltelementes 3a zu dem dargestellten Zeitpunkt keine Auswirkung auf das Spannungszeiger-Diagramm hat. Dies ist dadurch zu erklären, dass die mit der, das Schaltelement 3a aufweisenden Halbbrücke 10a elektrisch verbundenen Phase U in diesem Moment keinen Beitrag zum resultierenden Spannungszeiger 20 liefert. Dieser Sachverhalt gilt für den gesamten in Figur 4 schraffiert dargestellten Winkelbereich von 120°. Dieser von der von dem Ausfall betroffenen Phase U unbeeinflusste Winkelbereich wird erfindungsgemäß genutzt, um trotz des Ausfalls des Schaltelementes 3a einen Weiterbetrieb der elektrischen Maschine 1 zu ermöglichen.

Dies wird durch Ansteuersignale erreicht, wie sie in Figur 5 schematisch dargestellt sind. Dabei liegt das Ansteuersignal des Schaltelementes 3a ausfallbedingt dauerhaft auf einem Low-Pegel. Durch dauerhaftes Schließen (konstanter High-Pegel) des Low-Side-Schalters 3d der vom Ausfall betroffenen Halbbrücke 10a kann die betroffene Phase U der elektrischen Maschine 1 konstant auf das Versorgungsspannungspotential gelegt werden. Die Ansteuersignale für die übrigen Schaltelemente 3b, 3c, 3e und 3f der weiteren Halbbrücken 10 b und 10c können, wie in Figur 5 dargestellt, im Vergleich zum Normalbetrieb (vgl. Figur 3) unverändert beibehalten werden. Um aber Schlepp- und Bremsmomente zu vermeiden, welche die Drehbewegung der elektrischen Maschine 1 unnötig behindern würden, ist es vorteilhaft, die Schaltelemente 3b, 3c, 3e und 3f der weiteren Halbbrücken 10 b und 10c in dem zweiten Winkelbereich (nicht schraffierte Fläche in Figur 4), welcher von der Phase U beeinflusst ist, in einen Freilauf-Modus zu schalten, in welchem all diese Schaltelemente 3b, 3c, 3e und 3f dauerhaft geöffnet sind.

In dem zur Ansteuerung verbleibenden Winkelbereich kann die elektrische Maschine 1 sowohl motorisch als auch generatorisch betrieben werden. Da im Fall einer dreiphasigen elektrischen Maschine 3 aber nur noch ein Winkelbereich von 120°, also ein Drittel einer elektrischen Umdrehung zur Leistungseinspeisung oder - entnahme genutzt werden kann, wird die mögliche motorische/generatorische Leistung entsprechend auch auf ca. ein Drittel reduziert. Das auf diese Weise erzeugte reduzierte Drehmoment oder die auf diese Weise erzeugte reduzierte elektrische Energie können aber genutzt werden, um das Kraftfahrzeug weiterzubewegen oder im Falle eines Hybridfahrzeuges einen Verbrennungsmotor zu starten bzw. die Batterie 7 zu laden.

Die Erfindung wurde beispielhaft für das Ausfallszenario c) beschrieben, bei welchem ein High-Side-Schalter dauerhaft geöffnet ist. Das erfindungsgemäße Verfahren ist aber auch auf die übrigen Ausfallszenarien a), b) und d) in weitgehend analoger Weise anzuwenden. Letztendlich ist nur entscheidend, dass in der vom Ausfall betroffenen Halbbrücke das noch intakte Schaltelement derart dauerhaft geschlossen oder geöffnet wird, dass sich an der betreffenden Phasenklemme der elektrischen Maschine ein definiertes Spannungspotential (Zwischenkreisspannung oder Masse) einstellt.

## Patentansprüche

1. Verfahren zum Betrieb einer als Antriebsaggregat in einem Kraftfahrzeug dienenden mindestens dreiphasigen elektrischen Maschine (1), welche über einen Wechselrichter (2), insbesondere einen Pulswechselrichter, angesteuert wird, wobei der Wechselrichter (2) Schaltelemente (3a-3f) in Form von Halbbrücken (10a-10c) umfasst und jeweils eine Halbbrücke (10a; 10b; 10c) elektrisch mit einer Phase (U; V, W) der elektrischen Maschine (1) verbunden ist, **dadurch gekennzeichnet, dass** wenn ein erstes Schaltelement (3a) einer mit einer ersten Phase (U) verbundenen ersten Halbbrücke (10a) ausfallbedingt dauerhaft geschlossen ist,
- ein zweites Schaltelement (3d) der ersten Halbbrücke (10a) dauerhaft geöffnet wird und
- in einem ersten Winkelbereich einer elektrischen Umdrehung, welcher von der ersten Phase (U) unbeeinflusst ist, sämtliche Schaltelemente (3b, 3c, 3e, 3f) der weiteren Halbbrücken (10b, 10c) in herkömmlicher Weise angesteuert werden.

2. Verfahren zum Betrieb einer als Antriebsaggregat in einem Kraftfahrzeug dienenden mindestens dreiphasigen elektrischen Maschine (1), welche über einen Wechselrichter (2), insbesondere einen Pulswechselrichter, angesteuert wird, wobei der Wechselrichter (2) Schaltelemente (3a-3f) in Form von Halbbrücken (10a-10c) umfasst und jeweils eine Halbbrücke (10a; 10b; 10c) elektrisch mit einer Phase (U; V, W) der elektrischen Maschine (1) verbunden ist, **dadurch gekennzeichnet, dass** wenn ein erstes Schaltelement (3a) einer mit einer ersten Phase (U) verbundenen ersten Halbbrücke (10a) ausfallbedingt dauerhaft geöffnet ist,
- ein zweites Schaltelement (3d) der ersten Halbbrücke (10a) dauerhaft geschlossen wird und
- in einem ersten Winkelbereich einer elektrischen Umdrehung, welcher von der ersten Phase (U) unbeeinflusst ist, sämtliche Schaltelemente (3b, 3c, 3e, 3f) der weiteren Halbbrücken (10b, 10c) in herkömmlicher Weise angesteuert werden.

3. Verfahren nach einem der Ansprüche 1 oder 2, wobei die Schaltelemente (3b, 3c, 3e, 3f) der weiteren Halbbrücken (10b, 10c) in einem zweiten Winkelbereich einer elektrischen Umdrehung, welcher von der ersten Phase (U) beeinflusst ist, dauerhaft geöffnet werden.

4. Verfahren nach einem der Ansprüche 1 bis 3, wobei die Schaltelemente (3b, 3c, 3e, 3f) der weiteren Halbbrücken (10a, 10b) in dem ersten Winkelbereich derart angesteuert werden, dass die elektrische Maschine (1) in einem Motorbetrieb betrieben wird, wobei ein dadurch erzeugtes Drehmoment genutzt wird, um das Kraftfahrzeug mit reduziertem Drehmoment fortzubewegen oder um einen als weiteres Antriebsaggregat dienenden Verbrennungsmotor zu starten.

5. Verfahren nach einem der Ansprüche 1 bis 3, wobei die Schaltelemente (3b, 3c, 3e, 3f) der weiteren Halbbrücken (10b, 10c) in dem ersten Winkelbereich derart angesteuert werden, dass die elektrische Maschine (1) in einem Generatorbetrieb betrieben wird, wobei eine dadurch erzeugte elektrische Energie genutzt wird, um einen Energiespeicher (7) des Kraftfahrzeuges zu laden.

6. Steuergerät (5) zum Steuern eines Wechselrichters (2), insbesondere Pulswechselrichters, welcher eine als Antriebsaggregat in einem Kraftfahrzeug dienende mindestens dreiphasige elektrische Maschine (1) ansteuert, wobei der Wechselrichter (2) Schaltelemente (3a-3f) in Form von Halbbrücken (10a-10c) umfasst und jeweils eine Halbbrücke (10a; 10b; 10c) elektrisch mit einer Phase (U; V, W) der elektrischen Maschine (1) verbunden ist, **dadurch gekennzeichnet, dass** das Steuergerät (5) bei Ausfall eines erstes Schaltelementes (3a) einer mit einer ersten Phase (U) verbundenen ersten Halbbrücke (10a)
- ein zweites Schaltelement (3d) der ersten Halbbrücke (10a) dauerhaft öffnet, wenn das erste Schaltelement (3a) ausfallbedingt dauerhaft geschlossen ist, oder
- das zweite Schaltelement (3d) dauerhaft schließt, wenn das erste Schaltelement (3a) ausfallbedingt dauerhaft geöffnet ist, und
- in einem ersten Winkelbereich einer elektrischen Umdrehung, welcher von der ersten Phase (U) unbeeinflusst ist, sämtliche Schaltelemente (3b, 3c, 3e, 3f) der weiteren Halbbrücken (10b, 10c) in herkömmlicher Weise ansteuert.

## Claims

1. Method for operating an at least three-phase electric machine (1), which is used as a drive unit in a motor vehicle and is actuated by means of an inverter (2), in particular a pulse-controlled inverter, wherein the inverter (2) comprises switching elements (3a-3f) in the form of half-bridges (10a-10c) and in each case one half-bridge (10a; 10b; 10c) is electrically connected to a phase (U; V, W) of the electric machine (1), **characterized in that**, if a first switching element (3a) of a first half-bridge (10a), which is connected to a first phase (U), is permanently closed owing to failure,
- a second switching element (3d) of the first half-bridge (10a) is permanently opened and,
- in a first angle range of an electric rotation which is not influenced by the first phase (U), all of the switching elements (3b, 3c, 3e, 3f) of the further half-bridges (10b, 10c) are actuated in a conventional manner.

2. Method for operating an at least three-phase electric machine (1), which is used as a drive unit in a motor vehicle and is actuated by means of an inverter (2), in particular a pulse inverter, wherein the inverter (2) comprises switching elements (3a-3f) in the form of half-bridges (10a-10c) and in each case one half-bridge (10a; 10b; 10c) is electrically connected to a phase (U; V, W) of the electric machine (1), **characterized in that**, if a first switching element (3a) of a first half-bridge (10a), which is connected to a first phase (U), is permanently opened owing to failure,
- a second switching element (3d) of the first half-bridge (10a) is permanently closed and,
- in a first angle range of an electric rotation which is not influenced by the first phase (U), all of the switching elements (3b, 3c, 3e, 3f) of the further half-bridges (10b, 10c) are actuated in a conventional manner.

3. Method according to either of Claims 1 and 2, wherein, in a second angle range of an electric rotation which is influenced by the first phase (U), the switching elements (3b, 3c, 3e, 3f) of the further half-bridges (10b, 10c) are permanently opened.

4. Method according to one of Claims 1 to 3, wherein the switching elements (3b, 3c, 3e, 3f) of the further half-bridges (10a, 10b) are actuated in the first angle range such that the electric machine (1) is operated in a motor operating mode, wherein a torque generated as a result is used in order to move the motor vehicle with a reduced torque or in order to start an internal combustion engine which is used as a further drive unit.

5. Method according to one of Claims 1 to 3, wherein the switching elements (3b, 3c, 3e, 3f) of the further half-bridges (10b, 10c) are actuated in the first angle range such that the electric machine (1) is operated in a generator operating mode, wherein electrical energy generated as a result is used in order to charge an energy store (7) of the motor vehicle.

6. Control device (5) for controlling an inverter (2), in particular a pulse-controlled inverter, which actuates an at least three-phase electric machine (1), which is used as a drive unit in a motor vehicle, wherein the inverter (2) comprises switching elements (3a-3f) in the form of half-bridges (10a-10c) and in each case one half-bridge (10a; 10b; 10c) is electrically connected to a phase (U; V, W) of the electric machine (1), **characterized in that**, in the event of a failure of a first switching element (3a) of a first half-bridge (10a), which is connected to a first phase (U), the control device (5)
- permanently opens a second switching element (3d) of the first half-bridge (10a), if the first switching element (3a) is permanently closed owing to a failure, or
- permanently closes the second switching element (3d), if the first switching element (3a) is permanently opened owing to a failure, and,
- in a first angle range of an electric rotation which is not influenced by the first phase (U), actuates all of the switching elements (3b, 3c, 3e, 3f) of the further half-bridges (10b, 10c) in a conventional manner.

## Revendications

1. Procédé pour faire fonctionner une machine électrique (1) au moins triphasée faisant office de groupe propulseur dans un véhicule automobile, laquelle est excitée par le biais d'un onduleur (2), notamment un onduleur à impulsions, l'onduleur (2) comprenant des éléments de commutation (3a-3f) sous la forme de demi-ponts (10a-10c) et un demi-pont (10a ; 10b ; 10c) étant à chaque fois relié électriquement avec une phase (U ; V, W) de la machine électrique (1), **caractérisé en ce que** lorsqu'un premier élément de commutation (3a) d'un premier demi-pont (10a) relié avec une première phase (U) est fermé en permanence en raison d'une panne,
- un deuxième élément de commutation (3d) du premier demi-pont (10a) est ouvert en permanence et
- dans une première plage angulaire d'une révolution électrique, laquelle n'est pas influencée par la première phase (U), tous les éléments de commutation (3b, 3c, 3e, 3f) des autres demi-ponts (10b, 10c) sont excités de la manière habituelle.

2. Procédé pour faire fonctionner une machine électrique (1) au moins triphasée faisant office de groupe propulseur dans un véhicule automobile, laquelle est excitée par le biais d'un onduleur (2), notamment un onduleur à impulsions, l'onduleur (2) comprenant des éléments de commutation (3a-3f) sous la forme de demi-ponts (10a-10c) et un demi-pont (10a ; 10b ; 10c) étant à chaque fois relié électriquement avec une phase (U ; V, W) de la machine électrique (1), **caractérisé en ce que** lorsqu'un premier élément de commutation (3a) d'un premier demi-pont (10a) relié avec une première phase (U) est ouvert en permanence en raison d'une panne,
- un deuxième élément de commutation (3d) du premier demi-pont (10a) est fermé en permanence et
- dans une première plage angulaire d'une révolution électrique, laquelle n'est pas influencée par la première phase (U), tous les éléments de commutation (3b, 3c, 3e, 3f) des autres demi-ponts (10b, 10c) sont excités de la manière habituelle.

3. Procédé selon l'une des revendications 1 ou 2, selon lequel les éléments de commutation (3b, 3c, 3e, 3f) des autres demi-ponts (10b, 10c), dans une deuxième plage angulaire d'une révolution électrique, laquelle est influencée par la première phase (U), sont ouverts en permanence.

4. Procédé selon l'une des revendications 1 à 3, selon lequel les éléments de commutation (3b, 3c, 3e, 3f) des autres demi-ponts (10a, 10b) sont excités dans la première plage angulaire de telle sorte que la machine électrique (1) fonctionne dans un régime de moteur, un couple ainsi généré étant utilisé pour faire avancer le véhicule automobile avec un couple réduit ou pour démarrer un moteur à combustion interne servant de groupe propulseur supplémentaire.

5. Procédé selon l'une des revendications 1 à 3, selon lequel les éléments de commutation (3b, 3c, 3e, 3f) des autres demi-ponts (10b, 10c) sont excités dans la première plage angulaire de telle sorte que la machine électrique (1) fonctionne dans un régime de générateur, une énergie électrique ainsi générée étant utilisée pour charger un accumulateur d'énergie (7) du véhicule automobile.

6. Contrôleur (5) pour commander un onduleur (2), notamment un onduleur à impulsions, qui excite une machine électrique (1) au moins triphasée faisant office de groupe propulseur dans un véhicule automobile, l'onduleur (2) comprenant des éléments de commutation (3a-3f) sous la forme de demi-ponts (10a-10c) et un demi-pont (10a ; 10b ; 10c) étant à chaque fois relié électriquement avec une phase (U ; V, W) de la machine électrique (1), **caractérisé en ce que** le contrôleur (5), en cas de panne d'un premier élément de commutation (3a) d'un premier demi-pont (10a) relié avec une première phase (U),
- ouvre en permanence un deuxième élément de commutation (3d) du premier demi-pont (10a) lorsque le premier élément de commutation (3a) est fermé en permanence en raison d'une panne, ou
- ferme en permanence le deuxième élément de commutation (3d) lorsque le premier élément de commutation (3a) est ouvert en permanence en raison d'une panne, et
- dans une première plage angulaire d'une révolution électrique, laquelle n'est pas influencée par la première phase (U), excite tous les éléments de commutation (3b, 3c, 3e, 3f) des autres demi-ponts (10b, 10c) de la manière habituelle.
